# FASCICULE DE BREVET EUROPEEN

(11) **EP 1 012 090 B1**
(45) Date de publication et mention de la délivrance du brevet: **02.05.2002**
(21) Numéro de dépôt: 98904212.2
(22) Date de dépôt: 26.01.1998
(51) Int. Cl.: B65G 65/23

(54) **DISPOSITIF DE PRESENTATION ET D'ORIENTATION D'UN BAC EN VUE DU PRELEVEMENT OU DE LA MISE EN PLACE D'ARTICLES**
PRÄSENTATIONS- UND ORIENTIERUNGSVORRICHTUNG FÜR EINEN BEHÄLTER ZUR LAGERUNG UND ENTNAHME VON ARTIKELN
DEVICE FOR PRESENTING AND ADJUSTING A STOCK BOX FOR REMOVING OR STORING ARTICLES

(30) Priorité: 28.01.1997 FR 9701127
(43) Date de publication de la demande: 28.06.2000
(73) Titulaire: Atlas S.A., 35600 Bains-sur-Oust (FR)
(72) Inventeur: FRANCOIS, Luc, F-35600 Bains-sur-Oust (FR)
(74) Mandataire: Branger, Jean-Yves
(86) Numéro de dépôt international: FR9800127
(87) Numéro de publication internationale: WO9832681

(56) Documents cités:
- DE-A- 3 237 879
- FR-A- 2 369 188
- US-A- 2 942 716

## Description

La présente invention se rapporte à un dispositif de présentation et d'orientation d'un bac en vue du prélèvement ou de la mise en place d'articles.

Ce dispositif trouve une application particulière mais non exclusive dans l'alimentation des postes de bord de ligne de montage, en bacs de pièces détachées.

Notamment dans le domaine de l'industrie automobile, il existe de nombreux postes de montage où les opérateurs doivent prélever dans des bacs récepteurs des pièces détachées, en vue pour les monter sur l'automobile en cours d'assemblage.

Les bacs sont généralement de grandes dimensions et sont fixés à une palette.

Lorsque ces bacs reposent au sol, l'opérateur doit à chaque fois se pencher pour prélever une pièce. Au fur et à mesure que le bac se vide, le mouvement à effectuer devient de plus en plus fatiguant.

Par ailleurs, dès lors que le bac est vide, il faut le remplacer par un autre, ce qui est consommateur de temps. Bien entendu, une autre solution consiste à prévoir un second bac plein de pièces, disposé à côté du premier. Toutefois, on comprend que dans cette hypothèse, c'est un espace de travail qui est gaspillé inutilement.

La présente invention a pour but de pallier ces inconvénients.

Plus précisément, elle a pour objectif de proposer un dispositif de présentation et d'orientation d'un bac en vue du prélèvement ou de la mise en place d'un d'articles, qui présente des avantages sur le plan ergonomique, ce qui signifie que l'opérateur n'a plus à se pencher pour y prélever les articles, ou pour les mettre en place.

Un appareil de ce genre est décrit dans le document US-A-2 942 716. Il s'agit d'un dispositif de présentation et d'orientation d'un bac en vue du prélèvement ou de la mise en place d'articles qui comporte un support de bacs pivotants qui est mobile d'une position basse à une position haute et inversement, via une position intermédiaire dans laquelle il est incliné par rapport à l'horizontale. Ce support est articulé le long d'un de ses côtés, tandis que du côté opposé, il est fixé à un ensemole de câbles passant sur des poulies de renvoi.

Les câbles sont déplacés le long des poulies par un système de vérins d'axe vertical, dont la tige porte une poulie principale. C'est le mouvement de la tige qui provoque le déplacement des câbles, relativement aux poulies.

Elle vise également à fournir un dispositif qui, pour un même encombrement, intègre à la fois une station de positionnement de bacs pleins et une station d'enlèvement de bacs vides (ou inversement).

Enfin, la présente invention a pour but de fournir un dispositif de conception simple et facile à utiliser.

Conformément à l'invention, ce dispositif se caractérise par le fait qu'il comporte une paire de bras parallèles et articulés qui se prolongent par un support de bac pivotant, ces bras articulés étant mobiles entre des positions basse et haute et inversement, dans lesquelles le support est sensiblement horizontal, ce qui autorise la mise en place du bac sur le support ou son enlèvement, via une position intermédiaire dans laquelle le support est incliné par rapport à l'horizontale et facilite l'accès à l'intérieur du bac, pour le prélèvement ou la mise en place desdits articles, et que lesdits bras comportent à leur extrémité libre un bec d'accrochage, apte à coopérer avec un téton solidaire du support pour assurer le blocage de leur articulation mutuelle à partir d'un certain angle et ainsi, amener le support et le bac associé dans la position où ils sont inclinés par rapport à l'horizontale.

Bien qu'on ait fait référence plus haut à l'industrie automobile, le dispositif de l'invention peut servir dans toute industrie où l'on a besoin d'alimenter une chaîne de production en articles individuels. Il peut s'agir par exemple de l'industrie agro-alimentaire, de l'électronique, etc. Il trouve également application dans toute activité où l'on doit stocker, un par un, des articles dans un bac. C'est également le cas de l'industrie alimentaire.

Par ailleurs, selon d'autres caractéristiques avantageuses mais non limitatives:
- lesdits bras sont articulés d'une part sur un châssis fixe et d'autre part sur ledit support ;
- le dispositif comprend des moyens d'actionnement desdits bras articulés ;
- lesdits moyens consistent en un vérin, ce dernier agissant comme un vérin classique lorsque le transfert du bac se fait de bas en haut, alors qu'il agit en tant que ralentisseur/bloqueur lorsque le transfert du bac se fait de haut en bas ;
- ledit angle est de l'ordre de 150° ;
- dans ladite position intermédiaire, ledit support prend appui sur un élément du châssis ;
- le dispositif comprend des stations de positionnement et d'enlèvement du bac qui sont disposées à l'aplomb de l'espace délimité verticalement par les bras parallèles ;
- lesdites stations comprennent des rails de guidage du bac, ces rails étant inclinés de quelques degrés par rapport à l'horizontale pour faciliter la mise en place ou l'enlèvement du bac, ledit support se trouvant dans le prolongement de ces rails lorsqu'il est en position haute ou basse ;
- lesdits rails et/ou le support sont munis de galets de roulement ;
- le dispositif comporte des moyens aptes à n'autoriser la mise en place d'un bac sur le support que lorsque celui-ci se trouve, dépourvu de bac, dans le prolongement de la station de positionnement ;
- quand le transfert du bac se fait de haut en bas, le dispositif comprend un contre-poids apte à ramener le support en position haute pour la mise en place d'un nouveau bac.

D'autres caractéristiques et avantages de l'invention apparaîtront à la lecture de la description détaillée qui va suivre d'un mode de réalisation préférentiel. Cette description sera faite en référence aux dessins annexés dans lesquels:
- la figure 1 est une vue schématique de côté du dispositif, une paroi verticale formant capot ayant été enlevée pour rendre visible les éléments internes qui l'équipent;
- la figure 2 est une demi-vue schématique de dessus du dispositif de la figure 1, le support de bac étant en position haute ;
- les figures 3 et 4 sont des vues schématiques destinées à illustrer la structure et le fonctionnement de butées d'arrêt des bacs, en vue de l'approvisionnement du dispositif ;
- la figure 5 est un schéma de principe montrant la structure du dispositif avec lequel le transfert des bacs se fait de haut en bas.

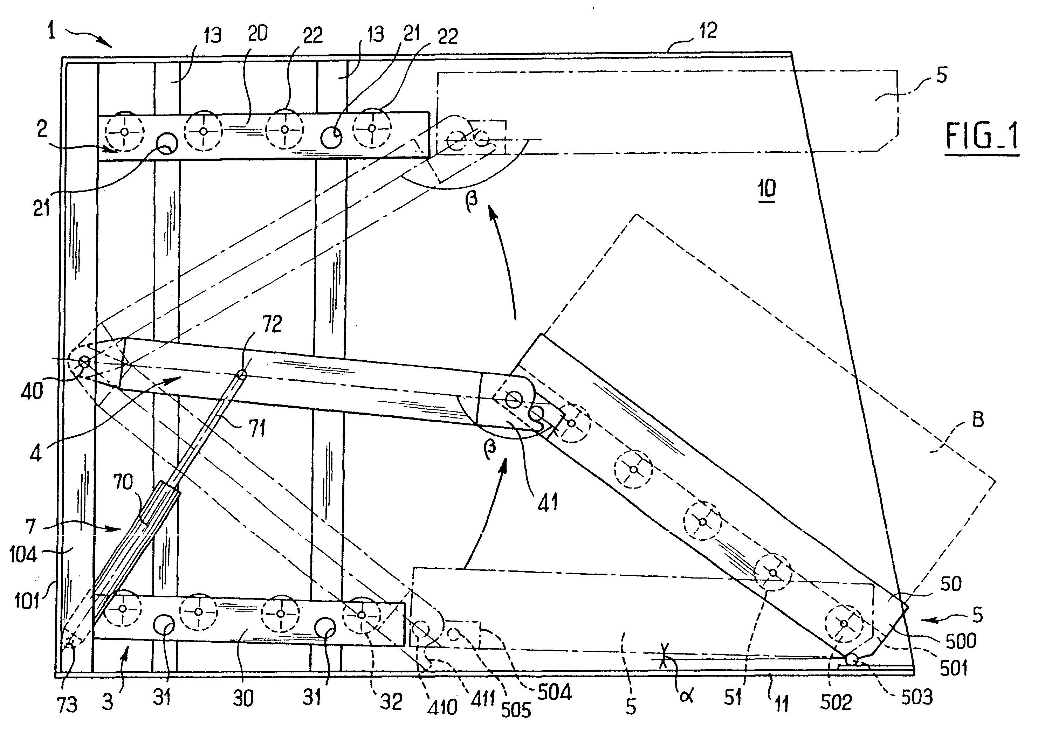

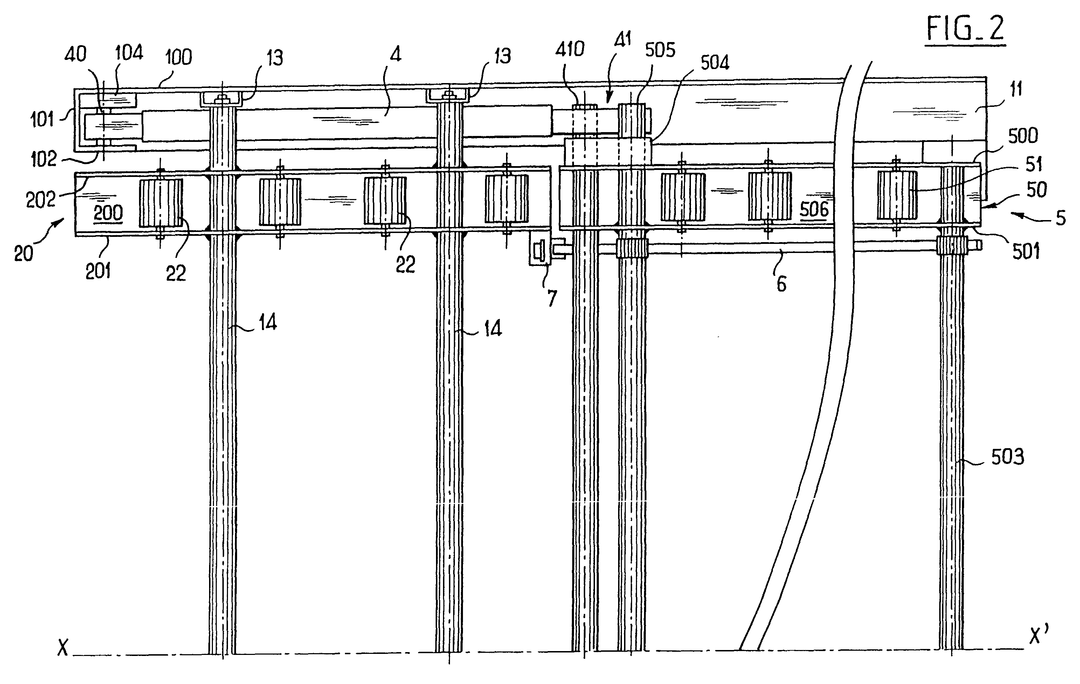

Le dispositif de présentation et d'orientation représenté aux figures 1 et 2 annexées présente une structure symétrique par rapport à un plan vertical médian matérialisé par une ligne en traits mixtes **XX'** à la figure 2. Pour cette raison, seule une demi-vue apparaît sur cette figure, la partie non visible du dispositif étant l'image de celle effectivement représentée par rapport au plan de symétrie **XX'**. Ce plan est longitudinal, l'avant du dispositif apparaissant à la partie droite des figures 1 et 2.

Le dispositif selon l'invention qui, en l'occurrence sert à desservir un bac contenant des articles à prélever, est formé d'un châssis métallique qui porte la référence 1. Il est délimité latéralement par deux cloisons verticales parallèles 100, dont la base 11 est repliée à 90° vers l'intérieur, pour pouvoir reposer sur un support tel que le sol. L'extrémité arrière verticale de cette cloison, visible sur la partie gauche de la figure 2, est repliée une première fois à 90° vers l'intérieur, pour former une paroi 101, et une seconde fois à 90°, également vers l'intérieur, pour constituer une aile d'extrémité verticale 102, qui s'étend parallèlement à la cloison 100. En quelque sorte, la paroi 101 et l'aile 102 constituent avec la cloison 100 une sorte d'étrier en "U". Une barre verticale 104 est fixée contre la face interne de la cloison 100, en regard de l'aile 102.

Le châssis 1 est rigidifié par un ensemble de deux paires de cornières verticales 13, qui présentent une section en "U". Chaque paire de cornières est soudée, par les ailes du "U" à la face interne de la cloison 100. Elles s'étendent à distance l'une de l'autre, sensiblement dans la moitié arrière de la cloison 100. Les deux cloisons 100 du dispositif se trouvent donc chacune avec deux cornières 13.

Elles se font face deux à deux et sont reliées en parties haute et basse par des tubes métalliques et cylindriques 14. Ceux-ci s'étendent transversalement et horizontalement par rapport au châssis.

Bien que cela ne soit pas réellement visible sur les figures, en partie haute, le tube 14 le plus près de l'arrière du dispositif s'étend à un niveau légèrement plus bas que le second tube. Au contraire, en partie inférieure, le tube 14 le plus près de l'arrière du dispositif s'étend à un niveau légèrement supérieur au second tube. On expliquera plus loin dans la description la raison d'un tel agencement.

La fixation des tubes 14 aux cornières 13 est assuré par un système de boulon. Toutefois, tout autre système de fixation connu de l'homme du métier peut être utilisé.

Le dispositif selon l'invention comporte une station de positionnement d'un bac, ainsi qu'une station d'enlèvement de ce bac. Dans l'exemple représenté sur les figures 1 et 2, la station de positionnement se trouve en partie inférieure du dispositif alors que la station d'enlèvement se trouve en partie haute. Toutefois, cet agencement peut être inversé si l'on souhaite faire transiter un bac du haut vers le bas et non pas du bas vers le haut.

La station de positionnement 3 est constituée de deux rails parallèles 30 à section en "U", dont les ailes s'étendent verticalement vers le haut. Dans ces ailes sont formées deux paires d'ouvertures 31 qui sont traversées par les tubes 14 précités. Des points de soudure permettent par exemple d'assurer la liaison entre les rails 30 et les tubes 14.

En vue de dessus, les ailes des rails 30 s'étendent parallèlement à la paroi verticale 100 du châssis, à courte distance de son aile d'extrémité 102.

Entre les ailes des rails 30 sont montés une série de galets de roulement 22 d'axe de rotation horizontal. Pour cela, des ouvertures y sont pratiquées, qui reçoivent l'axe des galets. Bien entendu, leur génératrice la plus haute s'étend à un niveau légèrement supérieur à l'extrémité libre des ailes des rails.

On comprend aisément que cette paire de rails avec ses galets associés va permettre de supporter et de déplacer un bac qui présente les dimensions adéquates.

Du fait du petit décalage en hauteur des tubes 14, les rails 30 se trouvent également légèrement inclinés par rapport à l'horizontale, selon une pente descendante de l'arrière vers l'avant du dispositif, l'angle d'inclinaison α étant de l'ordre de 2°.

La station d'enlèvement du bac, prévue en partie haute du dispositif présente une structure sensiblement analogue à celle de la station de positionnement.

En l'occurrence, elle comprend une paire de rails en "U" 20 avec une base 200 et des ailes parallèles 201 et 202. Ils présentent des ouvertures 21 pour le passage des tubes transversaux. Ces rails sont pourvus d'une série de galets 22, répartis et organisés de la même manière que ceux qui équipent la première station 3.

On notera que les rails 20 sont légèrement inclinés par rapport à l'horizontale, avec une pente ascendante de l'arrière vers l'avant, du même angle que celui précité. Les rails 30 se trouvent exactement à l'aplomb des rails 20 de la seconde station, ce qui explique qu'ils ne sont pas visibles sur la figure 2.

Le dispositif selon l'invention comporte également une paire de bras parallèles 4 qui s'étendent chacun dans un plan vertical. Ces bras sont disposés à proximité de la cloison 100 du châssis et sont articulés dans leur partie inférieure autour d'un axe 40 qui est monté entre les ailes de l'étrier formées par ladite cloison 100 et les éléments de paroi 101 et 102 déjà décrits. Comme le montre particulièrement la figure 1, cette articulation est située sensiblement à mi-hauteur du dispositif.

Egalement au niveau des étriers précités mais en partie inférieure, sont articulés les corps 70 de deux vérins 7 qui s'étendent parallèlement l'un à l'autre. Leur tige 72 est articulée sur chacun des bras 4, par exemple au niveau d'échancrures prévus dans ceux-ci.

On notera que la disposition des rails 20 et 30 des deux stations de positionnement et d'enlèvement déjà décrites est réalisée de telle manière que ces stations sont disposées à l'aplomb de l'espace délimité verticalement par les deux bras parallèles 4. Il n'y a donc aucune perte de place.

L'extrémité libre 41 des bras 4 (opposée à leur extrémité d'articulation au châssis) a une forme galbée avec un bec d'accrochage 411 dont on expliquera plus loin la fonction.

Les deux bras 4 sont reliés transversalement l'un à l'autre, au niveau de leur extrémité libre 41, par un tube cylindrique transversal 410 monté à rotation et formant axe d'articulation pour un support de bac pivotant que nous décrivons ci-après.

Ce support de bac, qui porte la référence générale 5, comporte essentiellement deux rails parallèles 50 qui, comme le montre la figure 2, s'étendent dans la continuité des rails 20 et 30. Chaque rail 50 a une section en "U" avec une aile externe 500 plus haute que l'aile interne 501. La base de ces rails est référencée 506 sur les figures.

Entre les ailes des rails s'étendent des galets rotatifs 51 qui, comme pour ceux des stations de positionnement et d'enlèvement, ont leur génératrice la plus haute à un niveau légèrement supérieur au rebord de l'aile 501. L'aile la plus haute 500 a une fonction de moyen de guidage pour le bac.

Contre la face externe de l'aile 500, et non loin de son extrémité arrière est prévue une pièce déforme parallélépipèdique rectangle 504 qui fait saillie vers l'extérieur. Cette pièce est traversée par le tube formant axe 410, lequel traverse également les deux rails 50.

Par ailleurs, les deux rails 50 sont rendus solidaires l'un de l'autre par l'intermédiaire de tubes transversaux et parallèles 503 et 505, le tube 503 étant proche de l'extrémité avant des rails 50 tandis que le tube 505 jouxte le tube 410.

Le tube 503 traverse l'aile 501 des rails 50 pour s'interrompre au niveau de l'aile externe 500. Au contraire, le tube 505 traverse l'aile 500 ainsi que la pièce 504 pour faire saillie vers l'extérieur sous la forme d'un téton d'extrémité. Les tubes 503 et 505 sont rendus solidaires des rails 50, par exemple par des points de soudure.

Un système de butées équipe le dispositif et porte sur les figures les références 6 et 7. Toutefois, par commodité, nous expliquerons sa structure et son fonctionnement lorsque nous décrirons comment on utilise le dispositif conforme à l'invention.

Pour procéder à cette description, nous allons supposer que l'on souhaite mettre en position un bac rempli de pièces dans le dispositif conforme à l'invention.

Pour ce faire, nous allons également supposer que les vérins 7 du dispositif ont leur tige 71 rétractée, ce qui signifie que les bras 4 occupe une position basse telle que celle représentée en traits mixtes à la figure 1. Dans cette positon, on comprend que le support 5, qui est articulé par rapport aux bras 4 autour de l'axe 410, se trouve dans le prolongement des rails 30 du poste de positionnement.

On amène alors un bac **B** par l'arrière du dispositif, par exemple au moyen d'un transpalette, de telle manière qu'il vienne à glisser sur les galets 32 de la station de positionnement. Cette manoeuvre est facilitée par la légère pente des rails 30 et du support 5.

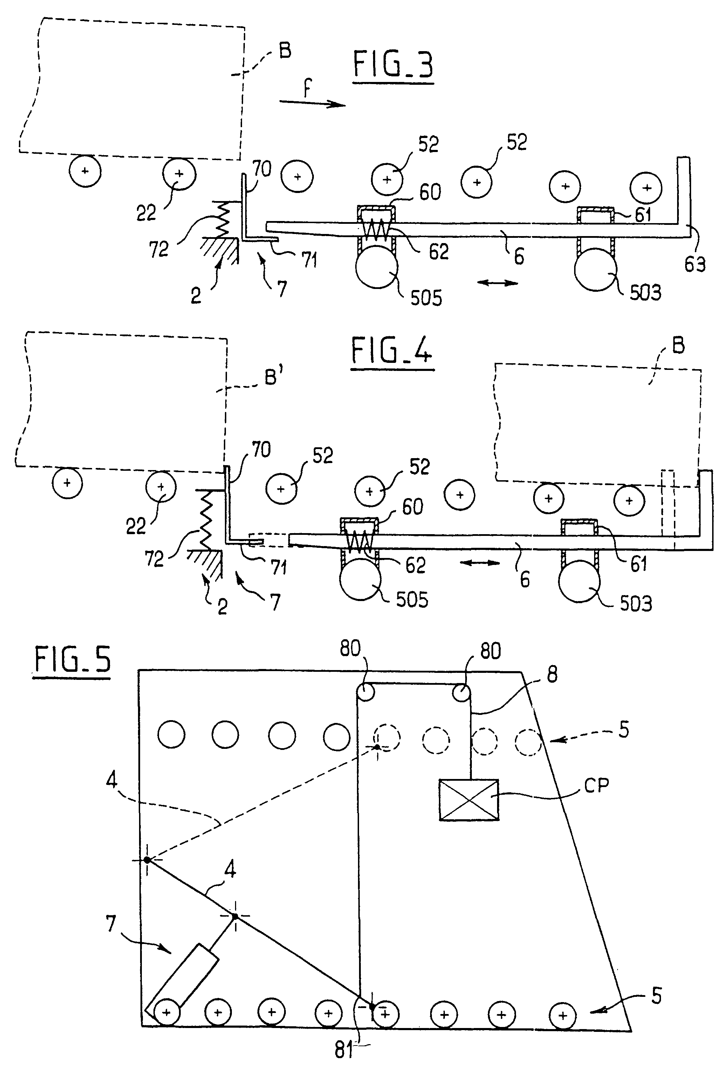

Comme le montrent les figures 2 et 3, une butée 7 escamotable est fixée le long d'une aile interne d'un des rails 32. Cette butée, à coulissement vertical, présente une forme générale de "L" avec une aile verticale 70 et une aile horizontale 71. Cette butée est couplée à un ressort 72 qui tend à ramener constamment la butée vers le haut. Au-dessus du plan matérialisé par les deux tubes 503 et 505 du support 5 s'étend longitudinalement une butée coulissante 6 en forme de tige, qui présente une extrémité libre avant coudée pour constituer une patte verticale 63.

Cette butée 6 traverse deux cages 60 et 61 disposées respectivement au-dessus des tubes 503 et 505. Un ressort 62, logé dans l'une des cages 60, tend à ramener constamment la butée 6 vers l'arrière du dispositif. Toutefois, dans une telle position, la butée 6 escamote la butée 7 vers le bas. La partie 70 de cette dernière ne s'oppose alors pas au transfert du bac **B** en place sur la station de positionnement vers le support de bac 5.

Quand ce transfert est fait (voir flèche **f**, figure 3), le coulissement longitudinal du bac est limité par la patte verticale 63 de la butée 6.

On se trouve alors dans la position de la figure 4. Tout en bloquant le bac **B** en position sur le support, la butée 6 a coulissé vers l'avant du dispositif et a libéré la butée 7, dont la partie verticale, en remontant, assure le blocage d'un nouveau bac **B'** en attente sur la station de positionnement.

Une fois que le bac **B** est en place, on actionne, par exemple au moyen d'une commande électrique, les vérins 7 de manière à ce que leur tige 71 s'allonge.

Le support 5 étant en appui par son extrémité avant sur le fond 11 du dispositif, il s'opère un basculement de ce support et du bac associé vers l'avant. On se trouve donc dans la position intermédiaire de la figure 1 où les bras 4 et le support 5 sont représentés en trait plein, ce qui signifie que le bac **B** occupe une position inclinée.

Une fois cette position adoptée, on bloque le fonctionnement du dispositif et l'opérateur peut alors procéder au prélèvement des pièces contenues dans le bac. Ce dernier occupe une position favorable au prélèvement d'articles, sans avoir à se pencher.

Il est à remarquer que dans cette position particulière, le bec d'accrochage 411 des bras 4 vient en prise avec les tétons 505 qui font saillie latéralement de part et d'autre du support. Cette coopération assure le blocage de leur articulation mutuelle. L'angle β qui sépare l'axe longitudinal des bras de celui du support 5 est alors de l'ordre de 150°.

Lorsque le bac **B** est vide, on procède à son évacuation. Pour ce faire on actionne à nouveau les vérins 7 pour provoquer encore l'allongement de leur tige 71. L'articulation mutuelle des bras et du support 5 étant bloquée, ceux-ci s'élèvent en bloc jusqu'à occuper la position relevée représentée en traits mixtes à la figure 1. Des capteurs de fin de course assurent par exemple l'arrêt de l'actionnement des vérins 7.

On peut alors procéder à l'évacuation du bac vide via la station d'enlèvement 2. Ce mouvement est facilité par la légère pente que présentent les rails 20.

Le dispositif représenté à la figure 5 présente la même structure que celui décrit précédemment, si ce n'est que la station de positionnement est en partie haute et que la station d'enlèvement est en partie basse.

Toutefois, le transfert du bac se fait de la même manière, en décrivant un chemin en forme de "C" inversé.

Dans un tel mode de fonctionnement, pour assurer le transfert du bac de haut en bas, les vérins agissent comme des ralentisseurs/bloqueurs ce qui signifie qu'ils visent à ralentir ce transfert du fait de la gravité. Pour ce faire, les deux chambres des corps des vérins sont reliées, via un robinet à ouverture réglable.

Lorsque le support 5 est en position basse, un contre-poids **CP**, est relié aux bras 4 par un système de câble 8 et de poulies 80, assure sa remontée au sommet du dispositif.

De préférence, les vérins 7 sont des vérins hydro-pneumatiques.

Les bacs **B**, en fonction de leur taille, peuvent être mis en place sur la station de positionnement, à l'aide d'un chariot élévateur. Ils peuvent être prévus repliables pour faciliter leur évacuation.

Bien entendu, le dispositif doit garantir la sécurité totale de l'opérateur de son travail. Pour ce faire, il peut être prévu des systèmes de blocage du bac en position si survient une panne d'alimentation. La zone située sous le support 5 peut être rendue inaccessible par un système de rideau à enrouleur fixé d'une part en-dessous du support 5 et, d'autre part, au châssis 1, dans sa partie inférieure.

Bien que la présente description ait été faite en référence à une application dans laquelle le bac mis en place au niveau de la station de positionnement est plein, on peut envisager que le bac soit vide. Le dispositif permet alors de présenter et d'orienter ce bac, en vue de la mise en place, à l'intérieur de celui-ci, d'articles. La station d'enlèvement sert alors à l'évacuation du bac plein d'articles. Dans une telle configuration, cette station d'enlèvement sera de préférence prévue en partie basse pour ne pas solliciter inutilement les vérins.

A titre indicatif, le dispositif peut être prévu pour des bacs recevant une charge utile de 1 300 daN.

## Revendications

1. Dispositif de présentation et d'orientation d'un bac (B) en vue du prélèvement ou de la mise en place d'articles, **caractérisé par le fait qu'**il comporte une paire de bras (4) parallèles et articulés qui se prolongent par un support (5) de bac pivotant, ces bras articulés (4) étant mobiles entre des positions basse et haute et inversement, dans lesquelles le support (5) est sensiblement horizontal, ce qui autorise la mise en place du bac (B) sur le support (5) ou son enlèvement, via une position intermédiaire dans laquelle le support (5) est incliné par rapport à l'horizontale et facilite l'accès à l'intérieur du bac (B), pour le prélèvement ou la mise en place desdits articles, et que lesdits bras (4) comportent à leur extrémité libre un bec d'accrochage (410), apte à coopérer avec un téton solidaire (505) du support (5) pour assurer le blocage de leur articulation mutuelle à partir d'un certain angle (β) et ainsi, amener le support (5) et le bac (B) associé dans la position où ils sont inclinés par rapport à l'horizontale.

2. Dispositif selon la revendication 1, **caractérisé par le fait que** lesdits bras (4) sont articulés d'une part sur un châssis fixe (1) et d'autre part sur ledit support (5).

3. Dispositif selon la revendication 1 ou 2, **caractérisé par le fait qu'**il comprend des moyens d'actionnement (7) desdits bras articulés (4).

4. Dispositif selon la revendication 3, **caractérisé par le fait que** lesdits moyens consistent en un vérin (7), ce dernier agissant comme un vérin classique lorsque le transfert du bac (B) se fait de bas en haut, alors qu'il agit en tant que ralentisseur/bloqueur lorsque le transfert du bac (B) se fait de haut en bas.

5. Dispositif selon l'une des revendications 1 à 4, **caractérisé par le fait que** ledit angle est de l'ordre de 150°.

6. Dispositif selon l'une des revendications 1 à 5, **caractérisé par le fait que** dans ladite position intermédiaire, ledit support (5) prend appui sur un élément (11) du châssis (1).

7. Dispositif selon l'une des revendications 1 à 6, **caractérisé par le fait qu'**il comprend des stations de positionnement (2 ; 3) et d'enlèvement (3 ; 2) du bac (B) qui sont disposées à l'aplomb de l'espace délimité verticalement par les bras parallèles (4).

8. Dispositif selon la revendication 7, **caractérisé par le fait que** lesdites stations (2, 3) comprennent des rails (20, 30) de guidage du bac (B), ces rails étant inclinés de quelques degrés par rapport à l'horizontale pour faciliter la mise en place ou l'enlèvement du bac, ledit support (5) se trouvant dans le prolongement de ces rails (20, 30) lorsqu'il est en position haute ou basse.

9. Dispositif selon la revendication 8, **caractérisé par le fait que** lesdits rails (20, 30) et/ou le support (5) sont munis de galets (22, 32, 52) de roulement.

10. Dispositif selon l'une des revendications 7 à 9, **caractérisé par le fait qu'**il comporte des moyens (6, 7) aptes à n'autoriser la mise en place d'un bac (B) sur le support (5) que lorsque celui-ci se trouve, dépourvu de bac, dans le prolongement de la station de positionnement (2 ; 3).

11. Dispositif selon l'une des revendications 1 à 10, dans lequel le transfert du bac (B) se fait de haut en bas, **caractérisé par le fait qu'**il comprend un contre-poids (CP) apte à ramener le support (5) en position haute pour la mise en place d'un nouveau bac (B).

## Claims

1. Apparatus for presenting and orienting a stock box (B) to enable articles to be removed or put into place, the apparatus being **characterized by** the fact that it comprises a pair of parallel hinged arms (4) which are extended by a pivoting box support (5), the hinged arms (4) being movable both ways between a low position and a high position, in both of which positions the support (5) is substantially horizontal, thereby enabling the box (B) to be placed on the support (5) or to be removed therefrom, the arms moving via an intermediate position in which the support (5) is inclined relative to the horizontal and facilitates access to the inside of the box (B) to remove said articles or to put them into place, and by the fact that said arms (4) have respective engagement fingers (410) at their free ends suitable for cooperating with respective studs (505) secured to the support (5) to lock mutual hinging between the arms and the support from a certain angle (β), thereby enabling the support (5) and the associated box (B) to be brought into the position where they are inclined relative to the horizontal.

2. apparatus according to claim 1, **characterized by** the fact that said arms (4) are hinged firstly to a fixed frame (1) and secondly to said support (5).

3. Apparatus according to claim 1 or 2, **characterized by** the fact that it includes actuator means (7) for actuating said hinged arms (4).

4. Apparatus according to claim 3, **characterized by** the fact that said actuator means comprise an actuator (7) acting as a conventional actuator when the box (B) is transferred upwards, and acting as means for slowing down and/or locking when transfer of the box (B) takes place downwards.

5. Apparatus according to any one of claims 1 to 4, **characterized by** the fact that said angle is about 150°.

6. Apparatus according to any one of claims 1 to 5, **characterized by** the fact that in said intermediate position, said support (5) bears against an element (11) of the frame (1).

7. Apparatus according to any one of claims 1 to 6, **characterized by** the fact that it has a positioning station (2; 3) and a removal station (3; 2) for the box (B) which are placed vertically in register with the space occupied by the parallel arms (4).

8. Apparatus according to claim 7, **characterized by** the fact that said stations (2, 3) have rails (20, 30) for guiding the box (B), said rails being inclined at a few degrees relative to the horizontal to facilitate putting the box into position or removing it, said support (5) being in line with the rails (20, 30) when it is in its high position or its low position.

9. Apparatus according to claim 8, **characterized by** the fact that said rails (20, 30) and/or the support (5) are provided with running wheels (22, 32, 52).

10. Apparatus according to any one of claims 7 to 9, **characterized by** the fact that it includes means (6, 7) suitable for allowing a box (B) to be put into place on the support (5) only when the support is to be found, without a box, in line with the positioning station (2; 3).

11. Apparatus according to any one of claims 1 to 10, in which the box (B) is transferred downwards, the apparatus being **characterized by** the fact that it includes a counterweight (CP) suitable for returning the support (5) to the high position to enable a new box (B) to be put into place.

## Patentansprüche

1. Vorrichtung zur Präsentation und zur Ausrichtung eines Behälters (B) zur Entnahme oder zur Lagerung von Artikeln, **dadurch gekennzeichnet, dass** sie ein Paar parallele und gelenkig angebrachte Arme (4) aufweist, die sich durch einen schwenkbaren Behälterträger (5) fortsetzen, wobei diese gelenkig angebrachten Arme (4) zwischen einer tiefen und einer hohen Position und umgekehrt beweglich sind, in welchen der Träger (5) im wesentlichen horizontal angeordnet ist, was die Anordnung des Behälters (B) auf dem Träger oder seine Abnahme über eine Zwischenposition ermöglicht, in welcher der Träger (5) bezüglich der Horizontalen geneigt ist und den Zugang zum Inneren des Behälters (B) für die Entnahme oder die Anordnung der Artikel erleichtert, und dass die Arme (4) an ihrem freien Ende eine Einhakspitze (410) aufweisen, die in der Lage ist mit einem einstückig mit dem Träger (5) ausgebildeten Zapfen (505) zusammenzuwirken, um die Blockierung ihrer Schwenkbarkeit zueinander ausgehend von einem bestimmten Winkel (β) sicherzustellen und somit den Träger (5) und den zugehörigen Behälter (B) in die Position zu bringen, in welcher sie bezüglich der Horizontalen geneigt angeordnet sind.

2. Vorrichtung gemäß Anspruch 1, **dadurch gekennzeichnet, dass** die Arme (4) einerseits auf einem festen Rahmen (1) und andererseits auf dem Träger (5) gelenkig angebracht sind.

3. Vorrichtung gemäß Anspruch 1 oder 2, **dadurch gekennzeichnet, dass** sie Antriebsvorrichtungen (7) für die gelenkig angebrachten Arme (4) aufweist.

4. Vorrichtung gemäß Anspruch 3, **dadurch gekennzeichnet, dass** die Vorrichtungen aus einem Stellantrieb (7) bestehen, wobei dieser letztere als klassischer Stellantrieb wirkt, wenn der Behälter (B) von unten nach oben bewegt wird, wohingegen er als Verlangsamer/Blockierer wirkt, wenn der Behälter (B) von oben nach unten bewegt wird.

5. Vorrichtung gemäß einem der Ansprüche 1 bis 4, **dadurch gekennzeichnet, dass** der Winkel in der Größenordnung von 150° liegt.

6. Vorrichtung gemäß einem der Ansprüche 1 bis 5, **dadurch gekennzeichnet, dass** der Träger (5) sich in der Zwischenposition auf ein Element (11) des Rahmens (1) auflegt.

7. Vorrichtung gemäß einem der Ansprüche 1 bis 6, **dadurch gekennzeichnet, dass** sie eine Station zur Anordnung (2; 3) und eine Station zur Abnahme (3; 2) des Behälters (B) aufweist, welche in lotrechter Richtung zu dem vertikal von den parallelen Armen (4) begrenzten Raum angeordnet sind.

8. Vorrichtung gemäß Anspruch 7, **dadurch gekennzeichnet, dass** die Stationen (2; 3) Schienen (20, 30) zur Führung des Behälters (B) umfassen, wobei diese Schienen um einige Grad bezüglich der Horizontalen geneigt sind, um die Anordnung oder die Abnahme des Behälters zu erleichtern, wobei sich der Träger (5) in der Verlängerung dieser Schienen (20, 30) befindet, wenn er in der hohen oder tiefen Position angeordnet ist.

9. Vorrichtung gemäß Anspruch 8, **dadurch gekennzeichnet, dass** die Schienen (20, 30) und/oder der Träger (5) mit Laufrollen (22, 32, 52) versehen sind.

10. Vorrichtung gemäß einem der Ansprüche 7 bis 9, **dadurch gekennzeichnet, dass** sie Vorrichtungen (6, 7) aufweist, welche in der Lage sind die Anordnung eines Behälters (B) auf dem Träger (5) nur dann zuzulassen, wenn sich dieser ohne den Behälter in der Verlängerung der Anordnungsstation (2; 3) befindet.

11. Vorrichtung gemäß einem der Ansprüche 1 bis 10, bei welcher der Behälter (B) von oben nach unten bewegt wird, **dadurch gekennzeichnet, dass** sie ein Gegengewicht (CP) aufweist, das in der Lage ist den Träger (5) in die hohe Position zurückzuführen, um einen neuen Behälter (B) anzuordnen.
